(19) Europäisches Patentamt
European Patent Office
Office européen des brevets

(11) Veröffentlichungsnummer: **0 344 594 B1**

(12) # EUROPÄISCHE PATENTSCHRIFT

(45) Veröffentlichungstag der Patentschrift: **08.09.93**

(51) Int. Cl.5: **C08G 69/32**

(21) Anmeldenummer: **89109331.2**

(22) Anmeldetag: **24.05.89**

(54) **Thermoplastisch verarbeitbares aromatisches Copolyetheramid, Verfahren zu seiner Herstellung und seine Verwendung zur Herstellung von Formkörpern.**

(30) Priorität: **28.05.88 DE 3818208**

(43) Veröffentlichungstag der Anmeldung:
**06.12.89 Patentblatt 89/49**

(45) Bekanntmachung des Hinweises auf die Patenterteilung:
**08.09.93 Patentblatt 93/36**

(84) Benannte Vertragsstaaten:
**AT BE CH DE ES FR GB GR IT LI NL SE**

(56) Entgegenhaltungen:
**DE-A- 1 595 681**
**DE-A- 2 636 379**
**DE-A- 2 900 264**

(73) Patentinhaber: **HOECHST AKTIENGESELLSCHAFT**

**D-65926 Frankfurt(DE)**

(72) Erfinder: **Cherdron, Harald, Prof. Dr.**
**Eichenweg 40**
**D-6200 Wiesbaden(DE)**
Erfinder: **Deckers, Hellmuth, Dr.**
**Autunstrasse 4**
**D-6507 Ingelheim(DE)**
Erfinder: **Herold, Friedrich, Dr.**
**Thüringer Weg 57**
**D-6238 Hofheim am Taunus(DE)**
Erfinder: **Hess, Reiner, Dr.**
**Lärchenstrasse 4**
**D-6200 Wiesbaden(DE)**

**EP 0 344 594 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft thermoplastisch verarbeitbare aromatische Copolyetheramide, deren Herstellung über Tieftemperaturlösungs-, Grenzflächen- oder Schmelzekondensation, daraus geformte Artikel wie Formteile, Folien, Drähte und Fäden sowie mögliche Anwendungen. Die erfindungsgemäßen Polymere zeigen dabei ein hohes Eigenschaftsniveau, können aus leicht zugänglichen Monomeren hergestellt und problemlos thermoplastisch verarbeitet bzw. verformt werden. Bezüglich dem Eigenschaftsniveau gelten insbesondere die hohen mechanischen Eigenschaften, speziell der hohe Anfangsmodul und eine hohe Glastemperatur und damit ausgezeichnete Thermostabilität als vorteilhaft.

Aromatische Polyamide sind bekannt für ihre ausgezeichneten thermischen, chemischen und mechanischen Eigenschaften.

Überwiegend p-verknüpfte Homopolymere wie Poly-p-phenylenterephthalamid (PPTA) aus p-Phenylendiamin (PPD) und Terephthalsäuredichlorid (TPC) zeigen zwar sehr hohe mechanische Eigenschaften, zersetzen sich jedoch vor ihrem Schmelzpunkt und müssen wegen ihrer geringen Löslichkeit in organischen Lösungsmitteln aus konzentrierter Schwefelsäure (zweistufiger Prozeß, Korrosionsprobleme) verarbeitet werden (DE-OS 2 219 703). Die Ursache liegt in dem sehr steifen Kettencharakter dieser Polymere.

Abhilfe bieten zunächst Copolymere auf Basis von PPTA, wobei zwar die Verarbeitung in organischen Lösungsmitteln, u.a. durch den Einbau von flexiblen Gruppen, erreicht wird, die Polymeren sich jedoch wie PPTA noch vor dem Schmelzpunkt zersetzen. Als Comonomere dienen hierbei beispielsweise 3,4'-Diaminodiphenylether (3,4'-ODA) bzw. 1,4-Bis-(4'-aminophenoxy)benzol (BAPOB) (EP-B 0 045 934 bzw. EP-A 0 199 090). Versuche zum Verpressen solcher Copolyamide, beispielsweise für Polymere mit 3,4'-ODA liefern zwar Formteile, erlauben jedoch nicht die Anwendung üblicher Methoden zur thermoplastischen Verarbeitung oder ein nachträgliches Verformen (JP 61/264 022-A).

Der Übergang zu Systemen aus m-Phenylendiamin (MPD) und Isophthalsäuredichlorid (IPC) führt zwar zu Polymeren mit nochmals erhöhter Löslichkeit, die Zersetzung liegt jedoch auch hier noch vor dem Schmelzpunkt (US-A 3 063 966). Verpressen dieser aromatischen Polyamide ergibt Formteile mit den gleichen Nachteilen wie oben, die mechanischen Eigenschaften liegen zudem auf relativ niedrigem Niveau (EP-A 0 198 167 und EP-A 0 200 472).

Erst der Einbau noch flexiblerer Bestandteile führt zu schmelzbaren Polyaramiden. Problematisch ist dabei der enge Spielraum zwischen thermoplastischer Verarbeitbarkeit, d.h. einem genügenden Abstand zwischen der notwendigen Verarbeitungstemperatur und der Zersetzungstemperatur, und noch hohen mechanischen Eigenschaften, da hohe Werte für den Anfangsmodul auf einer möglichst steifen Polymerstruktur basieren, also möglichst einer p-Verknüpfung. Zudem beschränkt die geforderte thermische Stabilität auf die Verwendung überwiegend aromatischer Bestandteile, da ein Einbau aliphatischer Gruppen zu einer schlechteren Temperaturbeständigkeit führt (US-A 4 072 665 und US-A 4 087 481).

Ein überwiegend aromatisches, relativ flexibles und leicht zugängliches, für die Herstellung aromatischer Polyetheramide oft eingesetztes Monomer ist 2,2-Bis-(4'-aminophenoxyphenyl)propan (BAP), das bevorzugt aus den großtechnisch verfügbaren Produkten Bisphenol A und p-Chlornitrobenzol synthetisiert wird.

Bekannt sind auch schmelzbare Polyetheramide auf Basis von IPC und BAP (US-A 3 505 288, Beispiele 3 und 4). Als nachteilig erscheint der hohe Anteil an m-Strukturen und ein entsprechend relativ niedriges Niveau der mechanischen Eigenschaften, insbesondere des Anfangsmoduls. Polymere aus TPC und BAP (Beispiel 5) werden als nicht schmelzbar mit einem Zersetzungspunkt von 350 °C beschrieben.

Eine Verbesserung bezüglich der Schmelzbarkeit und der mechanischen Eigenschaften von Polyetheramiden wird durch Polymere aus einer Kombination aus einem Äthergruppen aufweisenden aromatischen Diamin und einem aromatischen Diamin mit einem aromatischen Dicarbonsäuredihalogenid erreicht (DE-A 26 36 379). Ein spezielles Beispiel beschreibt den Einsatz von BAP/MPD und IPC.

Auch Polymere aus IPC und BAP/MPD-Mischungen sind aus einer Veröffentlichung bekannt (US-A 4 410 684). Hier werden Zusammensetzungen, bei denen der Hauptteil aus MPD, d.h. aus mehr als 50 Mol-% besteht, beschrieben. Über TPC ist in dieser Veröffentlichung nichts ausgesagt.

Das Konzept der beiden letztgenannten Veröffentlichungen basiert auf dem Einbau bzw. der Verwendung von m-Strukturen, die zu niedrigeren Glastemperaturen und Anfangsmoduli führen. Aber auch hier ist nicht erkannt worden, daß die Verwendung von TPC Copolyetheramide mit besonders wertvollen Eigenschaften liefert.

Der Erfindung liegt die Aufgabe zugrunde, thermoplastisch verarbeitbare aromatische Copolyetheramide zu entwickeln, die hohe mechanische Eigenschaften aufweisen. Insbesondere betrifft dies den Anfangsmodul und eine hohe Glasübergangstemperatur, d.h. es soll eine ausgezeichnete Temperaturbeständigkeit ermöglicht werden.

Die Erfindung betrifft ein thermoplastisch verarbeitbares aromatisches Copolyetheramid, dadurch gekennzeichnet, daß die Struktur aus wiederkehrenden Einheiten der Formeln

$-CO-Ar^1-CO-$ (A),

$NH-Ar^1-O-Ar^1-X-Ar^1-O-Ar^1-NH-$ (B) und

$-NH-Ar^2-NH-$ (C)

besteht, worin $Ar^1$ einen zweiwertigen aromatischen Rest mit 6 C-Atomen, der unsubstitiert oder mit bis zu 2 Alkyl - oder Alkoxyresten mit 1 C-Atom im Alkyl rest oder mit Halogen substituiert ist, bedeutet, dessen Bindungen in p-Stellung stehen, X eine 2,2-Propylidenbindung darstellt und $Ar^2$ gleich $Ar^1$ oder $Ar^1$, bei dem die Bindungen in m-Stellung stehen, sowie die Gruppierung $-Ar^1-Z-Ar^1-$ ist, bei der Z eine direkte Bindung oder ein Rest $-CH_2-$, $-C(CH_3)_2-$, $-SO_2-$, -CO-, -O-, -CH = CH-, -CO-NH- oder $-O-Ar^1-O-$ sowie der Rest

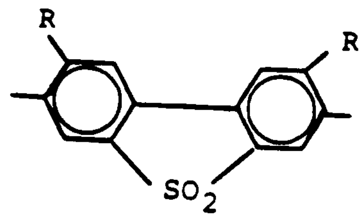

ist, in dem R für Wasserstoff oder einen verzweigten oder unverzweigten Alkylrest mit 1-4 C-Atomen steht, der Anteil der Einheiten (A) und der der Summe der Einheiten (B) und (C) jeweils 100 Mol-% beträgt, wobei der Anteil der Einheiten (C) bis zu 50 Mol-%, und wenn Z für $-SO_2-$ steht, bis zu 75 Mol-% beträgt und der Staudingerindex /$\eta$/ des Copolyetheramids im Bereich von 50 bis 1000 $cm^3/g$ liegt und die Glasübergangstemperatur über 200 °C beträgt.

Der Anteil an C beträgt vorzugsweise bis zu 25 Mol-% und, wenn -Z- für die Gruppierung $-SO_2-$ steht, vorzugsweise bis zu 50 Mol-%.

Die Herstellung der Copolymeren kann über übliche Kondensationstechniken wie Tieftemperaturlösungs-, Feststoff-, Grenzflächen- oder Schmelzekondensation erfolgen.

Überraschenderweise lassen sich diese aromatischen Copolyetheramide gut thermoplastisch verarbeiten, beispielsweise durch Verpressen zu Formteilen, Extrusion oder Spritzguß, und besitzen ein unerwartet hohes Eigenschaftsniveau. Die Verarbeitung zu Formteilen, Folien und Drähten erfolgt naturgemäß bevorzugt über Schmelzeprozesse, jedoch können Folien, Fäden und Drähte auch über Lösungsprozesse erhalten werden.

Zur Herstellung der Copolyetheramide gemäß der Erfindung eignen sich die folgenden Verbindungen:
Dicarbonsäurederivate der Formel

$W-CO-Ar^1-CO-W$ (A')

in der $-Ar^1-$ einen zweiwertigen Rest wie oben beschrieben darstellt und W je nach der gewählten Kondensationstechnik ein Halogen, vorzugsweise Chlor, oder eine -OH- oder -OR-Gruppe, wobei R einen verzweigten oder unverzweigten aliphatischen Rest mit 1-4 C-Atomen in der Alkylgruppe oder einen aromatischen Rest bedeutet, beispielsweise Terephthalsäuredichlorid, 2-Chlor-terephthalsäuredichlorid, Terephthalsäure oder Terephthalsäurediphenylester.

Als aromatisches Diamin der Formel

$H_2N-Ar^1-O-Ar^1-X-Ar^1-O-Ar^1-NH_2$ (B')

in der $-Ar^1-$ und -X- die oben angegebene Bedeutung haben eignet sich bevorzugt 2,2-Bis-(4'-aminophenoxyphenyl)propan.

Als aromatisches Diamin der Formel

$H_2N-Ar^2-NH_2$ (C')

in der $Ar^2$ die oben angegebene Bedeutung hat, eignet sich beispielsweise 2,4-Dichlor-p-phenylendiamin, 5-tert.-Butyl-m-phenylendiamin, 3,3′-Dimethoxybenzidin, 3,3′-Dichlorbenzidin, 4,4′-Diaminodiphenylether, 4,4′-Diaminodiphenylketon, 1,4-Bis-(4′-aminophenoxy)benzol oder 2,7-Diamino-3,6-dimethyl-dibenzothiophen-S,S-dioxid, vorzugsweise p-Phenylendiamin, m-Phenylendiamin, 3,3′-Dimethylbenzidin, 4,4′-Diaminodiphenylmethan oder 4,4-Diaminodiphenylsulfon.

Die Kondensation wird vorteilhaft nach einem üblichen Tieftemperaturlösungsverfahren durchgeführt.

Diese Lösungskondensation des aromatischen Dicarbonsäuredichlorids mit dem aromatischen Diamin erfolgt in aprotischen, polaren Lösungsmitteln vom Amidtyp, z.B. in N,N-Dimethylacetamid oder insbesondere in N-Methyl-2-pyrrolidon (NMP). Gegebenenfalls können diesen Lösungsmitteln in bekannter Weise zur Erhöhung der Lösefähigkeit bzw. zur Stabilisierung der Polyetheramidlösungen Halogenidsalze der ersten und/oder zweiten Gruppe des periodischen Systems zugegeben werden. Bevorzugte Zusätze sind Calciumchlorid und/oder Lithiumchlorid. Die beschriebenen aromatischen Copolyetheramide zeichnen sich allerdings durch eine hohe Löslichkeit in den obigen Lösungsmitteln des Amidtyps aus, so daß die Kondensation bevorzugt ohne Salzzusatz erfolgt. Die Ausgangsverbindungen (A′) einerseits und (B′) und (C′) andererseits werden im allgemeinen in äquimolaren Mengen eingesetzt. Üblicherweise wird die Menge an Dicarbonsäuredichlorid so gewählt, daß die Lösungsviskosität maximal wird, d.h. je nach Monomerreinheit werden geringfügig mehr oder weniger als als 100 Mol-% zugesetzt.

Die Polykondensationstemperaturen liegen zwischen 10 und 100 °C. Besonders gute Ergebnisse werden bei Reaktionstemperaturen zwischen 10 und 80 °C erzielt. Die Polykondensationsreaktionen werden so ausgeführt, daß nach Abschluß der Reaktion 2 bis 40, vorzugsweise 3 bis 30 Gew.-% an Polykondensat in der Lösung vorliegen. Für spezielle Anwendungen kann die Lösung bei Bedarf mit N-Methyl-2-pyrrolidon oder anderen Amidlösungsmitteln verdünnt werden.

Die Polykondensation kann in üblicher Weise z.B. durch Zugabe von monofunktionellen Verbindungen, wie Acetylchlorid, substituierten Benzoylchloriden, z.B. p-Chlorbenzoylchlorid, vorzugsweise aber Benzoylchlorid gestoppt werden, ebensogut ist die Verwendung monofunktioneller Amine, beispielsweise Anilin, N,N-Dimethyl-p-phenylendiamin oder 3-Chloranilin zur Begrenzung der Molmasse geeignet.

Nach Beendigung der Polykondensation, d.h. wenn die Polymerlösung die zur Weiterverarbeitung erforderliche Viskosität erreicht hat, wird der entstandene und locker an das Amidlösungsmittel gebundene Halogenwasserstoff durch Zugabe basischer Substanzen neutralisiert. Geeignet sind dafür beispielsweise Lithiumhydroxyd, Calciumhydroxyd, vorzugsweise aber Calciumoxid. Danach wird der Ansatz im allgemeinen für 50 bis 120 Minuten bei 50 bis 80 °C nachbehandelt, um die gewünschten physikalischen Werte der Polymeren zu erhalten. Zur Herstellung von geformten Gebilden gemäß der Erfindung werden die oben beschriebenen erfindungsgemäßen Copolyamidlösungen filtriert, entgast und in bekannter und im folgenden geschilderter Weise weiterverarbeitet.

Den Lösungen können noch geeignete Mengen an Additiven zugesetzt werden. Beispiele sind Lichtstabilisatoren, Antioxidationsmittel, Flammschutzmittel, Antistatika, Farbstoffe, Farbpigmente oder Füllstoffe.

Die Copolyetheramide können durch geeignete Verfahren, wie beispielsweise Destillation, Ausfällen oder Extraktion, isoliert und dann erneut mit Lösungsmitteln des Amidtyps, eventuell unter Verwendung der beschriebenen Zusätze zur Erhöhung der Lösefähigkeit, in eine geeignete Ausformlösung überführt werden. Beispielsweise sind so salzfreie Lösungen der Polymeren erhältlich. Die direkte Verarbeitung der Kondensationslösung wird aber bevorzugt.

Zur Isolation des Copolyetheramids kann die Lösung mit einem Fällungsmittel versetzt und das koagulierte Produkt abfiltriert werden. Typische Fällungsmittel sind beispielsweise Wasser, Methanol, aromatische Verbindungen wie Cyclohexan, Toluol etc. Bevorzugt erfolgt die Isolation durch Zerkleinern der Polymerlösung mit einem Überschuß an Wasser in einer Schneidmühle. Die fein zerkleinerten koagulierten Polymerteilchen erleichtern die nachfolgenden Waschschritte (Entfernen des bei der Neutralisation gebildeten Salzes) und die Trocknung des Produktes (Vermeiden von Einschlüssen) nach Abfiltration. Auch eine nachträgliche Zerkleinerung erübrigt sich, da direkt ein rieselfähiges Produkt entsteht.

Außer der beschriebenen Lösungskondensation, die als leicht zugängliches Verfahren gilt, können wie bereits erwähnt, auch andere übliche Verfahren zur Herstellung von Polyamiden, wie beispielsweise Schmelze-, Feststoff- oder Grenzflächenkondensation, angewendet werden. Auch diese Verfahren beinhalten neben der Kondensation gegebenenfalls die Regelung der Molmasse, Reinigungs- oder Waschschritte sowie den Zusatz geeigneter Additive.

Die Additive können darüber hinaus auch dem isolierten Copolymer bei der thermoplastischen Verarbeitung zugesetzt werden.

Die aromatischen Copolyetheramide entsprechend der Erfindung sind als überwiegend amorphe Polymere mit überraschend hohen mechanischen Eigenschaften, insbesondere des Anfangsmodul, und einer hohen Glasübergangstemperatur charakterisiert. Der Staudingerindex $[\eta]$ liegt im Bereich 50 bis 1000 $cm^3/g$,

bevorzugt 100 bis 600 $cm^3/g$. Die Glasübergangstemperaturen liegen im allgemeinem über 200 °C, bevorzugt über 220 °C sowie insbesondere über 235 °C und die Schmelztemperaturen im Bereich bis zu 380 °C. Der Anfangsmodul naßgesponnener und verstreckter Fäden erreicht mindestens 5 N/tex. Bei unverstreckten Folien liegt er über 1,5 GPa, bevorzugt über 2,0 GPa. Der Anfangsmodul von Preßplatten liegt über 3 GPa, bevorzugt über 3,5 GPa.

Die Verarbeitung der Copolyetheramide gemäß der Erfindung erfolgt bevorzugt über die Schmelze nach üblichen thermoplastischen Verarbeitungstechniken. Verpressen, Extrudieren oder Spritzgießen führt zu Formteilen, Fäden, Drähten oder Folien.

Bei der Verarbeitung über die Schmelze können Hilfsmittel wie Gleitmittel oder Schmelzestabilisatoren zugesetzt werden. Einführung von Endgruppen, z.B. durch die oben beschriebene Zugabe von monofunktionellen Verbindungen, gilt als günstig zum Erreichen einer hohen Schmelzestabilität. Auch ist es zweckmäßig, die Polymeren vor der Verarbeitung gut zu trocknen.

In besonderen Fällen können die Copolymeren auch aus der Lösung, bevorzugt aus der Kondensationslösung des beschriebenen Tieftemperaturlösungsverfahrens, verarbeitet werden. Beispielsweise bietet dieses Verfahren eine einfache Möglichkeit zur Herstellung von Fäden und dünnen Folien oder kann auch für spezielle Anwendungen wie die Herstellung von Prepregs (über Tränkverfahren) oder die Verwendung als Drahtlack von Vorteil sein.

Die Herstellung der geformten Artikel aus der Ausformlösung kann durch Trocken-, Naß- oder Trockennaßverfahren sowie durch Versprühen erfolgen.

Beispielsweise wird die Spinnlösung bei Naßverfahren durch einen Spinnkopf mit mehreren Spinnöffnungen in ein Koagulationsbad gefördert, wobei sich die Lösung zu Fäden verfestigt. Bei einer Variante dieses Verfahrens, dem sogenannten Trockennaßverfahren, durchlaufen die Fäden zunächst ein inertes Medium, vorzugsweise Luft oder Stickstoff, und treten erst dann in das Koagulationsbad ein.

Pulp entsteht beispielsweise durch Versprühen der Lösungen in ein geeignetes Koagulationsbad.

Zur Formung von Folien über Gießverfahren wird die filtrierte und entgaste Lösung in dünnen Schichten auf Trägermaterialien aufgebracht. Geeignete Trägermaterialien sind inerte Polymerfolien, z.B. aus Polyester oder Metallbänder, im Labormaßstab auch Glasplatten. Bevorzugt ist eine Verarbeitung der Lösungen bei Temperaturen von mindestens ca. 10 °C unterhalb des Siedepunktes des verwendeten Lösungsmittels, besonders bevorzugt bei mindestens ca. 30 °C unterhalb des Siedepunktes. Bei zu hohen Temperaturen besteht die Gefahr, daß sich die Polymeren zersetzen, zu niedrige Temperaturen erschweren die Verarbeitung wegen der hohen Viskositäten. Günstig, aber nicht notwendig ist eine Vortrocknung der gegossenen Folien, bevorzugt bis zu einem Lösungsmittelgehalt der Folie zwischen 5 und 90 %. Geeignete Bedingungen sind Temperaturen zwischen Raumtemperatur und ca. 10 °C unterhalb des Siedepunktes des verwendeten Lösungsmittels, auch verbunden mit starker Konvektion z.B. in Umluftschränken. Je nach Temperatur und Konvektion genügen Zeiten zwischen einigen Minuten bis zu Tagen, bevorzugt 2 bis 30 Minuten. Die Folien lassen sich je nach Trägermaterial sofort oder bei oder direkt nach der Koagulation ablösen. Alternativ zu Gießverfahren können die filtrierten und entgasten Lösungen auch direkt durch geeignete Düsen koaguliert werden. Dabei sind Naß- oder Trockennaßverfahren anwendbar, bei ersterem wird direkt koaguliert, bei letzterem durchläuft die vorgeformte Folie zunächst eine Zone mit einem nicht-koagulierenden Medium, wie z.B. Luft. Diese Zone kann zwischen 5 und 400 mm, bevorzugt zwischen 10 und 100 mm betragen.

Als Koagulationsbad können Wasser, Mischungen aus Wasser und organischen oder reine organische Lösungsmittel verwendet werden, jeweils bei Bedarf auch mit Salzzusätzen. Als Salzzusatz eignen sich z.B. die oben aufgeführten Halogenidsalze der ersten und zweiten Gruppe des periodischen Systems. Bevorzugt wird das Salz, welches auch als Lösungsvermittler zur Herstellung der Kondensationslösung benutzt wird. Besonders bevorzugt ist Calciumchlorid, wobei die Konzentration in weiten Bereichen variiert werden kann. Es ist wünschenswert, daß die Temperatur ca. 10 °C tiefer als der Siedepunkt des Koagulationsbades ist, bevorzugt zwischen Raumtemperatur und 90 °C.

Die koagulierten Fäden bzw. Folien werden anschließend gewässert, z.B. können sie über Rollen durch mehrere aufeinander folgende Waschbäder geführt werden. Möglichst vollständiges Auswaschen des Salzes ist die Voraussetzung zum Erreichen der Eigenschaften. Bevorzugt sind wäßrige Bäder, die Temperaturen liegen dann zwischen Raumtemperatur und 90 °C, bevorzugt bis 70 °C. Üblicherweise gelten mehrere Bäder in Reihe und eine Umwälzung des Mediums (Gegenströmung) als günstig.

Die Trocknung erfolgt bevorzugt über Rollen oder durch IR-Strahler bei Temperaturen zwischen 100 und 400 °C, günstigerweise, aber nicht notwendigerweise, mit Temperaturgradienten und/oder unter Stickstoff. Die Trocknungszeiten sind umso kürzer, je höher die Temperatur ist. Besonders günstig zur Verarbeitung gelten Endtemperaturen von 200 - 300 °C, so daß kurze Trocknungszeiten genügen.

Bei Folien gilt überdies ein Temperschritt bei Temperaturen zwischen 200 und 400 °C, bevorzugt 200 und 300 °C, gegebenenfalls unter Anlegen einer Spannung oder unter einer Stickstoff-Atmosphäre, als günstig zum Erreichen einer hohen Dimensionsstabilität. Bei der Herstellung verstreckter Folien erübrigt sich ein gesonderter Temperschritt.

Zum uniaxialen oder biaxialen (nacheinander oder simultan) Verstrecken können bekannte Methoden angewandt werden: Neben Verstreckung trockener Formkörper über heiße Flächen, unter IR-Strahlern oder sonstigen Wärmequellen besteht auch die Möglichkeit, Formkörper mit einem Restgehalt an Lösungsmittel und/oder Salz, auch in Lösungsmittelbädern, naß zu verstrecken. Bei ersterer Methode liegt ein Vorteil in den relativ niedrigen mindestens notwendigen Temperaturen im Bereich 200 - 300 °C, bevorzugt um 250 °C. Auch hier kann unter Stickstoff verstreckt werden. Auch Kombinationen aus Naß- und Trockenverstreckung sind möglich. Die Verstreckungsverhältnisse liegen im Bereich 0,5 bis 10 fach, bevorzugt bei 2-5 fach (uniaxial). Erfindungsgemäß genügen schon relativ niedrige Verstreckungsverhältnisse zum Erreichen außergewöhnlich hoher mechanischer Eigenschaften.

Die Copolyetheramide gemäß der Erfindung eignen sich zur Herstellung einer Vielzahl von Formteilen wie Lagerteile, Dichtungen, Verschlüsse, Clips, elektrische Isolatoren, elektrische Stecker, Gehäuse für elektrische Teile, Karosserieteile im Kraftfahrzeugbau, Kolben, Zahnräder, Turbinenflügel, Laufräder, Fadenführungen, Steuerwellen, Bremsbeläge, Kupplungsscheiben etc.

Fäden, Fasern oder Pulp aus den erfindungsgemäßen Copolyetheramiden können beispielsweise als Verstärkungsmaterialien für Gummi, thermoplastische Kunststoffe oder wärmehärtende Harze, zur Herstellung von Filtergeweben oder als leichter Dämmstoff verwendet werden.

Folien und Papier eignen sich als hitzebeständiges Isolationsmaterial, Folien insbesondere als Substrat für flexible Leiterplatten und für den Einsatz im Bereich der Datenverarbeitung.

Eine besondere Anwendung, bei der insbesondere der hohe Anfangsmodul als günstig gilt, besteht in der Verwendung als thermoplastische Hochtemperatur-Matrix für Verbundwerkstoffe. Die beanspruchten Copolymere eignen sich dabei sowohl in Form von Lösungen, wobei die hohe Löslichkeit die Herstellung salzfreier Lösungen erlaubt, als auch in Form von Pulver, Fäden oder Folien zur Herstellung von Prepregs oder Hybridgeweben.

Die Copolyetheramide gemäß der Erfindung bzw. die daraus hergestellten Formteile sind nach folgenden Test-Methoden geprüft worden:

**Staudingerindex [$\eta$]:**

Der Staudingerindex [$\eta$] ist nach Gleichung 1 definiert:

$$[\eta] = \lim_{c_2 \to 0} \frac{(\eta/\eta_1)-1}{c_2} \qquad \underline{\text{Gl. 1}}$$

wobei $\eta$ und $\eta_1$ die Viskositäten der Lösung bzw. des Lösungsmittels und $c_2$ die Konzentration des Polymers bedeuten. Gemessen wurde in N-Methyl-pyrrolidon bei 25 °C.

**Viskosität $\eta_o$:**

Die Viskosität $\eta_o$ wurde mit einem Rotationsviskosimeter (RV 100, Fa. Haake, Karlsruhe, Bundesrepublik Deutschland) bestimmt, angegeben ist der auf Schergefälle Null extrapolierte Wert der Kondensationslösung bei 90 °C.

**Mechanische Eigenschaften:**

Reißfestigkeit (RF), Reißdehnung (RD), Streckspannung (SS), Dehnung bei Streckspannung (DSS) (s. Tabellen 1 bis 4), Anfangsmodul (AM) und Knotenfestigkeit wurden mit Hilfe von Instron Zug-Dehnungs-Geräten bei 23 °C und 50 % relativer Luftfeuchte bestimmt.

Formkörper:

Die mechanischen Eigenschaften von Formkörpern wurden an aus Pulver verpreßten Platten (Ø 6 cm, Dicke ca. 1 mm) in Anlehnung an DIN 53 455 mit Probekörpern S3A nach DIN 53 504 bestimmt.

Folien:

In Anlehnung an DIN 53 455 mit Probekörper 5 (Streifenbreite 15 mm, Einspannlänge 50 mm und Meßgeschwindigkeit 20 mm/min)

Fäden:

In Anlehnung an DIN 53 834, Teil 1

**Thermische Eigenschaften:**

Die thermischen Daten wie Glasübergangstemperatur, Erweichungs-, Schmelz- und Zersetzungspunkt wurden nach den Methoden der Thermogravimetrie (TGA: Stickstoff, 3 K/min), der Differentialthermoanalyse (DSC: Stickstoff, 10 K/min), der thermomechanischen Analyse (TMA: TA-3000-System mit Meßkopf TMA 40 der Fa. Mettler, Greifensee, Schweiz; Stickstoff, 40 K/min, 5 mm Einspannlänge, ca. 0,25 cN/tex Wechsellast) und durch Torsionsschwingungsversuche (TSV: in Anlehnung an DIN 53 445) ermittelt.

**Elektrische Eigenschaften:**

Alle Werte wurden bei 23 °C und 50 % relativer Luftfeuchte bestimmt, im einzelnen
Dielektrizitätszahl und Verlustfaktor in Anlehnung an DIN 53 483
Widerstand in Anlehnung an DIN 53 482
Durchschlagfestigkeit in Anlehnung an DIN 53 481 bei 50 Hz.

**Beispiele**

Die Anteile an Dicarbonsäurekomponente und der Summe der Diaminkomponenten wurden jeweils zu 100 Mol-% berechnet.

**1)** Aromatisches Copolyetheramid aus 100 Mol-% Terephthalsäuredichlorid (TPC), 75 Mol-% 2,2-Bis-(4'-aminophenoxyphenyl)propan (BAP) und 25 Mol-% 4,4'-Diaminodiphenylmethan (DADM).

123,16 g BAP und 19,83 g DADM wurden unter Stickstoff in 2537 g N-Methyl-pyrrolidon (NMP) gelöst und zwischen 15 und 70 °C innerhalb von ca. 60 Minuten 81,21 g TPC zugegeben. Die viskose und klare Lösung wurde noch ca. 40 Minuten lang bei 70 °C nachgerührt und dann mit 24,54 g CaO (96 %ig, d.h. im 5 %igen Überschuß) neutralisiert und weitere 30 Minuten bei 70 °C nachgerührt.

Die Lösung enthielt 7,0 % Copolyetheramid und 1,7 % $CaCl_2$, das gelöste Copolyetheramid zeigte einen Staudingerindex [$\eta$] von 327 $cm^3/g$.

Die Lösung wurde filtriert und in einer Schneidmühle unter Zugabe von Wasser koaguliert und zerkleinert. Das ausgefällte Copolyetheramid wurde mehrfach mit Wasser und dann mit Aceton gewaschen. Die Trocknung des rieselfähigen Polymers erfolgte bei 130 °C unter vermindertem Druck (50-80 mbar) unter leichter Stickstoff-Überleitung.

Bezüglich der thermischen Stabilität des Copolyetheramids zeigte sich in der TGA erst ab 400 °C ein Gewichtsverlust. Bei der DSC betrug die Glasübergangstemperatur 253 °C, die Form der Glasstufe deutete auf ein überwiegend amorphes Polymer hin. Entsprechend zeigte sich bezüglich des Schmelzverhaltens nur ein sehr kleiner Effekt, der Schmelzbereich endete bei ca. 360 °C.

**2)** Eine Kondensationslösung entsprechend Beispiel 1 wurde filtriert, entgast und zu Folien gegossen. Dazu wurde sie mit einer Rakel bei 90 °C auf Glasplatten ausgezogen. Die gegossenen Folien wurden anschließend 48 Stunden bei 90 °C vorgetrocknet, dann in Wasser bei 25 °C koaguliert, anschließend für 20 Minuten in fließendem Wasser und für 24 Stunden in entsalztem Wasser gewässert und danach bei 120 °C und 50 mbar unter leichter Stickstoff-Überleitung für 48 Stunden getrocknet.

Die Dicke der Folien kann, je nach der aufgerakelten Schichtdicke, zwischen 2 und 100 $\mu m$ eingestellt werden, die Folien sind sehr transparent und nahezu farblos bis leicht gelb-gold.

Die mechanischen Eigenschaften einer unverstreckten Folie (30 $\mu m$) betrugen 69 MPa Reißfestigkeit, 90 % Reißdehnung und 2,2 GPa Anfangsmodul.

In der TMA erweichten die Folien bei 236 °C.

**3)** Entsprechend nach Beispiel 1 hergestelltes und getrocknetes, rieselfähiges Pulver wurde mit einer Hochtemperaturpresse zu Platten von 6 cm Durchmesser und 1 mm Dicke verpreßt.

Den Einfluß der Preßtemperatur auf die mechanischen Eigenschaften im Bereich von 300 bis 350 °C zeigt Tabelle 1, gepreßt wurde jeweils 5 Minuten bei 2,5 t.

Tabelle 1

| T/°C | SS MPa | DSS % | RF MPa | RD % |
|---|---|---|---|---|
| 300 | - | - | 51,7 | 4,0 |
| 310 | - | - | 66,4 | 5,7 |
| 320 | - | - | 87,5 | 9,1 |
| 330 | 92,8 | 11,4 | 90,4 | 10,7 |
| 340 | 90,8 | 11,3 | 87,6 | 12,3 |
| 350 | 91,8 | 10,8 | 89,8 | 25,0 |

Der Anfangsmodul einer bei 330 °C, verpreßten Platte betrug 3,6 GPa.

In der TSV zeigte eine bei 330 °C verpreßte Platte eine Glasübergangstemperatur von 243 °C, die Form der Glasstufe deutete auf ein weitgehend amorphes Polymer hin. Der Schmelzbereich erstreckte sich bis 350 °C, der Schubmodul des Schmelzeplateaus betrug 3,7 N/mm$^2$.

**4)** Aromatisches Copolyetheramid aus 100 Mol-% Terephthalsäuredichlorid (TPC), 50 Mol-% 2,2-Bis- (4'-aminophenoxyphenyl)propan (BAP) und 50 Mol-% 4,4'-Diaminodiphenylmethan (DADM).

81,21 g TPC, 82,10 g BAP und 39,65 g DADM wurden in 2255 g NMP wie in Beispiel 1 kondensiert.

Die Lösung enthielt 7,0 % Copolyetheramid und 1,9 % $CaCl_2$, das gelöste Copolyetheramid zeigte einen Staudingerindex [$\eta$] von 470 cm$^3$/g.

Die Nachbehandlung erfolgte ebenfalls wie in Beispiel 1.

Bezüglich der thermischen Stabilität des Copolyetheramids zeigte sich in der TGA erst ab 405 °C ein Gewichtsverlust. Bei der DSC betrug die Glasübergangstemperatur 270 °C, die Form der Glasstufe deutete auf ein überwiegend amorphes Polymer hin.

Die Kondensationslösung wurde entsprechend Beispiel 2 zu Folien verarbeitet, die mechanischen Eigenschaften einer unverstreckten Folie (25µm) betrugen 77 MPa Reißfestigkeit, 106 % Reißdehnung und 1,7 GPa Anfangsmodul. In der TMA erweichten die Folien bei 248 °C.

Entsprechend den Beispielen 1 und 3 konnte das rieselfähige Pulver bei 380 °C zu transparenten und sehr zähen Platten verpreßt werden.

**Vergleich 1:**

Aromatisches Copolyetheramid aus 100 Mol-% Terephthalsäuredichlorid (TPC), 25 Mol-% 2,2-Bis-(4'-aminophenoxyphenyl)propan (BAP) und 75 Mol-% 4,4'-Diaminodiphenylmethan (DADM).

81,21 g TPC, 41.05 g BAP und 59,48 g DADM wurden in 1974 g NMP wie in Beispiel 1 kondensiert.

Die Lösung enthielt 7,0 % Copolyetheramid und 2,1 % $CaCl_2$, das gelöste Copolyetheramid zeigte einen Staudingerindex [$\eta$] von 626 cm$^3$/g.

Die Nachbehandlung erfolgte ebenfalls wie in Beispiel 1.

Bezüglich der thermischen Stabilität des Copolyetheramids zeigte sich in der TGA erst ab 410 °C ein Gewichtsverlust.

Die Kondensationslösung wurde entsprechend Beispiel 2 zu Folien verarbeitet, die mechanischen Eigenschaften einer unverstreckten Folie (35 µm) betrugen 73 MPa Reißfestigkeit, 115 % Reißdehnung und 1,4 GPa Anfangsmodul. In der TMA erweichten die Folien bei 265 °C.

Das Copolyetheramid konnte entsprechend Beispiel 3 bei 380 °C aber nicht zu Platten verpreßt werden.

**5)** Aromatisches Copolyetheramid aus 100 Mol-% Terephthalsäuredichlorid (TPC), 87,5 Mol-% 2,2-Bis-(4'-aminophenoxyphenyl)propan (BAP) und 12,5 Mol-% p-Phenylendiamin (PPD). 81,21 g TPC, 143,68 g BAP und 5,41 g PPD wurden in 3097 g NMP wie in Beispiel 1 kondensiert.

Die Lösung enthielt 6,0 g Copolyetheramid und 1,4 % $CaCl_2$, das gelöste Copolyetheramid zeigte einen Staudingerindex [$\eta$] von 276 cm$^3$/g und die Kondensationslösung eine Viskosität $\eta_o$ von 18,2 Pa•s bei 90 °C.

Die Nachbehandlung erfolgte ebenfalls wie in Beispiel 1.

Die Kondensationslösung wurde entsprechend Beispiel 2 zu Folien verarbeitet, die mechanischen Eigenschaften einer unverstreckten Folie (30 µm) betrugen 88 MPa Reißfestigkeit, 107 % Reißdehnung und 2,1 GPa Anfangsmodul. In der TMA erweichten die Folien bei 235 °C.

**6)** Aromatisches Copolyetheramid aus 100 Mol-% Terephthalsäuredichlorid (TPC), 75 Mol-% 2,2-Bis-(4'-aminophenoxyphenyl)propan (BAP) und 25 Mol-% p-Phenylendiamin (PPD).

81,21 g TPC, 123,16 g BAP und 10,81 g PPD wurden in 2861 g NMP wie in Beispiel 1 kondensiert und nachbehandelt.

Die Lösung enthielt 6,0 % Copolyetheramid und 1,5 % $CaCl_2$, das gelöste Copolyetheramid zeigte einen Staudingerindex [$\eta$] von 555 $cm^3/g$.

Die Kondensationslösung wurde entsprechend Beispiel 2 zu Folien verarbeitet, die mechanischen Eigenschaften einer Unverstreckten Folie (15 $\mu$m) betrugen 89 MPa Reißfestigkeit, 107 % Reißdehnung und 2,3 GPa Anfangsmodul. In der TMA erweichten die Folien bei 240 °C.

Entsprechend Beispiel 3 konnte das rieselfähige Pulver bei 350 °C zu transparenten und sehr zähen Platten verpreßt werden, die mechanischen Eigenschaften betrugen 95 MPa Reißfestigkeit und 10 % Reißdehnung.

Bezüglich der thermischen Stabilität des Copolyetheramids zeigte sich in der TGA erst ab 410 °C ein Gewichtsverlust. Bei der DSC betrug die Glasübergangstemperatur 262 °C, die Form der Glasstufe deutete auf ein überwiegend amorphes Polymer hin.

**7)** Aromatisches Copolyetheramid aus 100 Mol-% Terephthalsäuredichlorid (TPC), 50 Mol-% 2,2-Bis-(4'-aminophenoxyphenyl)propan (BAP) und 50 Mol-% p-Phenylendiamin (PPD).

81,21 g TPC, 82,10 g BAP und 21,63 g PPD wurden in 1738 g NMP wie in Beispiel 1 kondensiert und nachbehandelt.

Die Lösung enthielt 8,0 % Copolyetheramid und 2,4 % $CaCl_2$, das gelöste Copolyetheramid zeigte einen Staudingerindex [$\eta$] von 726 $cm^3/g$ und die Kondensationslösung eine Viskosität $\eta_0$ von 40,8 Pa•s bei 90 °C

Bezüglich der thermischen Stabilität des Copolyetheramids zeigte sich in der TGA erst ab 460 °C ein Gewichtsverlust. Bei der DSC betrug die Glasübergangstemperatur 280 °C, die Form der Glasstufe deutete auf ein überwiegend amorphes Polymer hin.

**8)** Eine Kondensationslösung hergestellt nach Beispiel 7 wurde entsprechend Beispiel 2 zu Folien verarbeitet. Die mechanischen Eigenschaften einer unverstreckten Folie (11$\mu$m) betrugen 81 MPa Reißfestigkeit, 33 % Reißdehnung und 2,5 GPa Anfangsmodul.

In der TMA erweichten die Folien bei 260 °C.

Die elektrischen Eigenschaften der Folien lagen bei $3{,}8 \cdot 10^{14}$ Ω für den Oberflächenwiderstand, $1{,}6 \cdot 10^{16}$ Ω•cm für den Volumenwiderstand, 4,6 für die Dielektrizitätszahl, $2{,}8 \cdot 10^{-2}$ für den Verlustfaktor und einer Durchschlagfestigkeit von 297 kV/mm.

**9)** Eine Kondensationslösung entsprechend Beispiel 7 wurde filtriert, entgast und naß versponnen. Dazu wurde sie bei 80 °C aus einer Düse mit 50 Öffnungen von jeweils 100 $\mu$m Durchmesser in ein Koagulationsbad, bestehend aus einer 60 °C warmen Lösung von 35 % NMP in Wasser, mit einer Geschwindigkeit von 16 m/min ausgesponnen. Die erhaltenen Fäden wurden durch mehrere Waschbäder, eine Waschmaschine (ca. 20 Umschlingungen), über zwei Trockengaletten (160 und 180 °C) und schließlich bei 390 °C über eine heiße Fläche gezogen. Dabei betrug die Verstreckung 1:2,5.

Die mechanischen Eigenschaften der Fäden mit Titer 100 dtex lagen ungedreht bei 33 cN/tex Reißfestigkeit, 3,8 % Reißdehnung und 10 N/tex Anfangsmodul.

**10)** Aromatisches Copolyetheramid aus 100 Mol-% Terephthalsäuredichlorid (TPC), 75 Mol-% 2,2-Bis-(4'-aminophenoxyphenyl)propan (BAP) und 25 Mol-% 2,7-Diamino-3,6-dimethyl-dibenzothiophen-S,S-dioxid (TS).

81,21 g TPC, 123,16 g BAP und 27,43 g TS wurden in 2638 g NMP wie in Beispiel 1 kondensiert und nachbehandelt.

Die Lösung enthielt 7,0 % Copolyetheramid und 1,6 % $CaCl_2$, das gelöste Copolyetheramid zeigt einen Staudingerindex [$\eta$] von 274 $cm^3/g$.

Die Glasübergangstemperatur beträgt 249 °C, die Form der Glasstufe deutet auf ein überwiegend amorphes Polymer hin. Entsprechend zu Beispiel 3 wurde der Einfluß der Preßtemperatur auf die mechanischen Eigenschaften im Bereich von 300-370 °C untersucht, vgl. Tabelle 2.

Tabelle 2

| T (°C) | RF (MPa) | RD (%) |
|---|---|---|
| 300 | 47,8 | 3,3 |
| 310 | 80,0 | 5,0 |
| 330 | 82,4 | 5,4 |
| 340 | 80,2 | 5,2 |
| 350 | 76,7 | 5,6 |
| 370 | 95,2 | 7,7 |

Der Anfangsmodul einer bei 340 °C verpreßten Platte betrug 5,3 GPa.

In der TSV zeigte eine bei 340 °C verpreßte Platte bei 245 °C eine Glasübergangstemperatur, die Form der Glasstufe deutete auf ein weitgehend amorphes Polymer hin. Der Schubmodul des bis 390 °C reichenden Schmelzeplateaus betrug 5,5 N/mm$^2$.

**11)** Aromatisches Copolyetheramid aus 100 Mol-% Terephthalsäuredichlorid (TPC), 87,5 Mol-% 2,2-Bis-(4'-aminophenoxyphenyl)propan (BAP) und 12,5 Mol-% 1,4-Bis-(4'-aminophenoxy)benzol (BAPOB).

81,21 g TPC, 143,68 g BAP und 14,62 g BAPOB wurden in 2741 g NMP wie in Beispiel 1 kondensiert und nachbehandelt.

Die Lösung enthielt 7,0 % Copolyetheramid und 1,5 % $CaCl_2$, das gelöste Copolyetheramid zeigte einen Staudingerindex [$\eta$] von 239 cm$^3$/g.

Bezüglich der thermischen Stabilität des Copolyetheramids zeigte sich in der TGA erst ab 400 °C ein Gewichtsverlust. Bei der DSC beträgt die Glasübergangstemperatur 246 °C, die Form der Glasstufe deutete auf ein überwiegend amorphes Polymer hin.

Entsprechend Beispiel 3 wurde der Einfluß der Preßtemperatur auf die mechanischen Eigenschaften im Bereich von 300-350 °C untersucht, vgl. Tabelle 3.

Tabelle 3

| T (°C) | SS (MPa) | DSS (%) | RF (MPa) | RD (%) |
|---|---|---|---|---|
| 300 | - | - | 80,3 | 6,0 |
| 310 | - | - | 72,3 | 5,3 |
| 340 | - | - | 81,7 | 6,7 |
| 350 | 91,6 | 9,9 | 86,6 | 9,8 |

Der Anfangsmodul einer bei 350 °C verpreßten Platte betrug 4,8 GPa.

12) Aromatisches Copolyetheramid aus 100 Mol-% Terephthalsäuredichlorid (TPC), 75 Mol-% 2,2-Bis-(4'-aminophenoxyphenyl)propan (BAP) und 25 Mol-% 1,4-Bis-(4'-aminophenoxy)benzol (BAPOB).

81,21 g TPC, 123,16 g BAP und 29,23 g BAPOB wurden in 2662 g NMP wie in Beispiel 1 kondensiert und nachbehandelt.

Die Lösung enthielt 7,0 % Copolyetheramid und 1,6 % $CaCl_2$, das gelöste Copolyetheramid zeigte einen Staudingerindex [$\eta$] von 577 cm$^3$/g und die Kondensationslösung eine Viskosität $\eta_o$ von 10,7 Pa•s bei 90 °C.

Bezüglich der thermischen Stabilität des Copolyetheramids zeigte sich in der TGA erst ab 390 °C ein Gewichtsverlust. Bei der DSC betrug die Glasübergangstemperatur 253 °C, die Form der Glasstufe deutete auf ein überwiegend amorphes Polymer hin.

**13)** Die Kondensationslösung aus Beispiel 12 wurde entsprechend Beispiel 2 zu Folien verarbeitet, die mechanischen Eigenschaften einer unverstreckten Folie (20 µm) betrugen 78 MPa Reißfestigkeit, 95 % Reißdehnung und 2,3 GPa Anfangsmodul.

In der TMA erweichten die Folien bei 235 °C

**14)** Entsprechend Beispiel 3 wurden Platten aus dem Copolyetheramid entsprechend Beispiel 12 hergestellt und der Einfluß der Preßtemperatur auf die mechanischen Eigenschaften im Bereich von 330-350 °C untersucht, vgl. Tabelle 4.

Tabelle 4

| T (°C) | SS (MPa) | DSS (%) | RF (MPa) | RD (%) |
|---|---|---|---|---|
| 330 | - | - | 89,0 | 7,4 |
| 340 | 98,4 | 11,0 | 93,3 | 10,7 |
| 350 | 98,2 | 10,2 | 98,1 | 14,3 |

Der Anf angsmodul einer bei 350 °C verpreßten Platte betrug 4,5 GPa.

**15)** Aromatisches Copolyetheramid aus 100 Mol-% Terephthalsäuredichlorid (TPC), 50 Mol-% 2,2-Bis-(4'-aminophenoxyphenyl)propan (BAP) und 50 Mol-% 1,4-Bis- (4-aminophenoxy)benzol (BAPOB).

81,21 g TPC, 82,10 g BAP und 58,47 g BAPOB wurden in 2505 g NMP wie in Beispiel 1 kondensiert und nachbehandelt.

Die Lösung enthielt 7,0 % Copolyetheramid und 1,7 % $CaCl_2$, das gelöste Copolyetheramid zeigte einen Staudingerindex [η] von 584 $cm^3/g$.

Bezüglich der thermischen Stabilität des Copolyetheramids zeigte sich in der TGA erst ab 400 °C ein Gewichtsverlust. Bei der DSC betrug die Glasübergangstemperatur 265 °C, die Glasstufe deutete auf ein überwiegend amorphes Polymer hin.

Die Kondensationslösung wurde entsprechend Beispiel 2 zu Folien verarbeitet, die mechanischen Eigenschaften einer unverstreckten Folie (30 µm) betrugen 92 MPa Reißfestigkeit, 151 % Reißdehnung und 2,3 GPa Anfangsmodul.

In der TMA erweichten die Folien bei 240 °C.

Entsprechend Beispiel 3 konnte das rieselfähige Pulver bei 370 °C zu transparenten und sehr zähen Platten verpreßt werden.

**Vergleich 2:**

Aromatisches Copolyetheramid aus 100 Mol-% Terephthalsäuredichlorid (TPC), 25 Mol-% 2,2-Bis-(4'-aminophenoxyphenyl)propan (BAP) und 75 Mol-% 1,4-Bis-(4'-aminophenoxy)benzol (BAPOB).

81,21 g TPC, 41,05 g BAP und 87,70 g BAPOB wurden in 2348 g NMP wie in Beispiel 1 kondensiert und nachbehandelt.

Die Lösung enthielt 7,0 % Copolyetheramid und 1,8 % $CaCl_2$, das gelöste Copolyetheramid zeigte einen Staudingerindex [η] von 459 $cm^3/g$.

Bezüglich der thermischen Stabilität des Copolyetheramids zeigte sich in der TGA erst ab 410 °C ein Gewichtsverlust.

Das Copolyetheramid konnte aber bei 380 °C nicht entsprechend Beispiel 3 zu Platten verpreßt werden.

**16)** Aromatisches Copolyetheramid aus 100 Mol-% Terephthalsäuredichlorid (TPC), 75 Mol-% 2,2-Bis-(4'-aminophenoxyphenyl)propan (BAP) und 25 Mol-% 4,4'-Diaminodiphenylsulfon (DADS).

81,21 g TPC, 123,16 g BAP und 24,83 g DADS wurden in 2604 g NMP wie in Beispiel 1 kondensiert und nachbehandelt.

Die Lösung enthielt 7,0 % Copolyetheramid und 1,6 % $CaCl_2$, das gelöste Copolyetheramid zeigte einen Staudingerindex [η] von 157 $cm^3/g$.

Bezüglich der thermischen Stabilität des Copolyetheramids zeigte sich in der TGA erst ab 400 °C ein Gewichtsverlust. Bei der DSC betrug die Glasübergangstemperatur 268 °C, die Glasstufe deutete auf ein überwiegend amorphes Polymer hin.

Entsprechend zu Beispiel 3 konnte das rieselfähige Pulver im Temperaturbereich von 240 bis 360 °C zu transparenten und sehr zähen Platten verpreßt werden. Die mechanischen Eigenschaften einer bei 300 °C verpreßten Platte betrugen 70 MPa Reißfestigkeit und 10 % Reißdehnung.

**17)** Aromatisches Copolyetheramid aus 100 Mol-% Terephthalsäuredichlorid (TPC), 50 Mol-% 2,2-Bis-(4'-aminophenoxyphenyl)propan (BAP) und 50 Mol-% 4,4'-Diaminodiphenylsulfon (DADS).

81,21 g TPC, 82,10 g BAP und 49,66 g DADS wurden in 2388 g NMP wie in Beispiel 1 kondensiert und nachbehandelt.

Die Lösung enthielt 7,0 % Copolyetheramid und 1,8 % $CaCl_2$, das gelöste Copolyetheramid zeigte einen Staudingerindex [η] von 128 $cm^3/g$.

Bezüglich der thermischen Stabilität des Copolyetheramids zeigte sich in der TGA erst ab 410 °C ein Gewichtsverlust. Bei der DSC betrug die Glasübergangstemperatur 296 °C, die Glasstufe deutete auf ein überwiegend amorphes Polymer hin.

Entsprechend Beispiel 3 konnte das rieselfähige Pulver im Temperaturbereich von 290-360 °C zu transparenten und sehr zähen Platten verpreßt werden. Die mechanischen Eigenschaften einer bei 330 °C verpreßten Platte betrugen 89 MPa Reißfestigkeit und 10 % Reißdehnung.

**18)** Die Kondensationslösung aus Beispiel 17 wurde entsprechend Beispiel 2 zu Folien verarbeitet, die mechanischen Eigenschaften einer unverstreckten Folie (25 µm) betrugen 65 MPa Reißfestigkeit, 55 % Reißdehnung und 1,8 GPa Anfangsmodul.

In der TMA erweichten die Folien bei 278 °C.

**19)** Aromatisches Copolyetheramid aus 100 Mol-% Terephthalsäuredichlorid (TPC), 25 Mol-% 2,2-Bis-(4'-aminophenoxyphenyl)propan (BAP) und 75 Mol-% 4,4'-Diaminodiphenylsulfon (DADS).

81,21 g TPC, 41,05 g BAP und 74,49 g DADS wurden in 2172,9 g NMP wie in Beispiel 1 kondensiert und nachbehandelt.

Die Lösung enthielt 7,0 % Copolyetheramid und 2,0 % $CaCl_2$, das gelöste Copolyetheramid zeigte einen Staudingerindex [η] von 197 $cm^3/g$.

Bezüglich der thermischen Stabilität des Copolyetheramids zeigte sich in der TGA erst ab 410 °C ein Gewichtsverlust. Bei der DSC betrug die Glasübergangstemperatur 333 °C, die Glasstufe deutete auf ein überwiegend amorphes Polymer hin.

Entsprechend Beispiel 3 konnte das rieselfähige Pulver im Temperaturbereich von 350-370 °C zu transparenten und sehr zähen Platten verpreßt werden.

**20)** Die Kondensationslösung aus Beispiel 19 wurde entsprechend Beispiel 2 zu Folien verarbeitet, die mechanischen Eigenschaften einer unverstreckten Folie (20 µm) betrugen 70 MPa Reißfestigkeit, 68 % Reißdehnung und 1,8 GPa Anfangsmodul.

In der TMA erweichten die Folien bei 314 °C

**21 bis 25)** Aromatisches Copolyetheramid entsprechend der Zusammensetzung aus Tabelle 5. Dabei wurden die Komponenten Terephthalsäuredichlorid (TPC), 2,2-Bis-(4'-aminophenoxyphenyl)propan (BAP), m-Phenylendiamin (MPD) und 3,3'-Dimethylbenzidin (OTD) verwendet, als Lösungsmittel N-Methyl-pyrrolidon (NMP).

Die Kondensation erfolgte wie in Beispiel 1, ebenso wie die Nachbehandlung.

Die Charakterisierung der Lösungen bezüglich Konzentration an Copolyetheramid und $CaCl_2$, Staudingerindex [$\eta$] des gelösten Copolyetheramids sowie der Viskosität $\eta_0$ der Kondensationslösung bei 90 °C ist ebenfalls in Tabelle 5 zusammengefaßt.

Die Kondensationslösungen wurden entsprechend Beispiel 2 zu Folien verarbeitet, die mechanischen Eigenschaften unverstreckter Folien sowie die Erweichungspunkte $T_E$ entsprechend einer TMA-Messung faßt ebenfalls Tabelle 5 zusammen.

Alle Copolyetheramide konnten, ausgehend von rieselförmigem Pulver, im Temperaturbereich von 330-350 °C entsprechend zu Beispiel 3 zu transparenten und sehr zähen Platten verpreßt werden.

Tabelle 5

| | Komponenten | | | | | |
|---|---|---|---|---|---|---|
| | A' | | | B' | | |
| Bsp. | Bez. | Mol-% | g | Bez. | Mol-% | g |
| 21 | TPC | 100 | 81,21 | BAP | 87,5 | 143,68 |
| 22 | TPC | 100 | 81,21 | BAP | 75 | 123,16 |
| 23 | TPC | 100 | 81,21 | BAP | 50 | 82,10 |
| 24 | TPC | 100 | 81,21 | BAP | 87,5 | 143,68 |
| 25 | TPC | 100 | 81,21 | BAP | 75 | 123,16 |

| | Komponenten | | | Charakterisierung | | | |
|---|---|---|---|---|---|---|---|
| | C' | | | Konzentration / % | | [η] | $\eta_0$ |
| Bsp. | Bez. | Mol-% | g | Polymer | $CaCl_2$ | $cm^3/g$ | Pa·s |
| 21 | OTD | 12,5 | 10,61 | 7,0 | 1,6 | 228 | 10,5 |
| 22 | OTD | 25 | 21,23 | 7,0 | 1,7 | 280 | 20,0 |
| 23 | OTD | 50 | 42,46 | 7,0 | 1,9 | 410 | 122 |
| 24 | MPD | 12,5 | 5,41 | 7,0 | 1,6 | 236 | 11,2 |
| 25 | MPD | 25 | 10,81 | 7,0 | 1,8 | 267 | 14,3 |

| | NMP | Folieneigenschaften | | | |
|---|---|---|---|---|---|
| | | Reißfestigkeit | Reißdehnung | Anfangsmodul | $T_E$ / °C |
| Bsp. | g | MPa | % | GPa | |
| 21 | 2688 | 82 | 59 | 2,2 | 239 |
| 22 | 2556 | 117 | 109 | 2,8 | 237 |
| 23 | 2293 | 156 | 62 | 4,0 | 245 |
| 24 | 2619 | 84 | 84 | 2,4 | 237 |
| 25 | 2418 | 110 | 135 | 2,7 | 239 |

**Patentansprüche**
**Patentansprüche für folgende Vertragsstaaten : AT, BE, CH, DE, FR, GB, IT, LI, NL, SE**

1. Thermoplastisch verarbeitbares aromatisches Copolyetheramid, dadurch gekennzeichnet, daß die Struktur aus wiederkehrenden Einheiten der Formeln

$-CO-Ar^1-CO-$ (A),

$-NH-Ar^1-O-Ar^1-X-Ar^1-O-Ar^1-NH-$ (B) und

$-NH-Ar^2-NH-$ (C)

besteht, worin $Ar^1$ einen zweiwertigen aromatischen Rest mit 6 C-Atomen, der unsubstituiert oder mit bis zu 2 Alkyl - oder Alkoxyresten mit 1 C-Atom im Alkylrest oder mit Halogen substituiert ist, bedeutet, dessen Bindungen in p-Stellung stehen, X eine 2,2-Propylidenbindung darstellt und $Ar^2$ gleich
- a) $Ar^1$
- b) $Ar^1$, bei dem die Bindungen in m-Stellung stehen,
- c) die Gruppierung $-Ar^1-Z-Ar^1$ ist, bei der Z eine direkte Bindung oder ein Rest $-CH_2-$, $-C(CH_3)_2-$, $-SO_2-$, -CO-, -O-,-CH=CH-, -CO-NH- oder $-O-Ar^1-O-$,
- d) der Rest

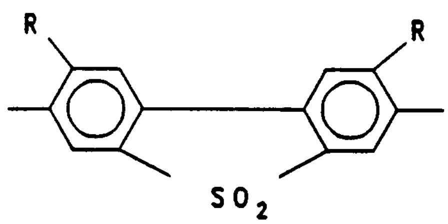

ist, in dem R für Wasserstoff oder einen Alkylrest mit 1-4 C-Atomen steht, der verzweigt oder unverzweigt ist, und der Anteil der Einheiten (A) und der der Summe der Einheiten (B) und (C) jeweils 100 Mol-% beträgt, wobei der Anteil der Einheiten (C) bis zu 50 Mol-%, und wenn Z für $-SO_2-$ steht, bis zu 75 Mol-% beträgt und der Staudingerindex $[\eta]$ des Copolyetheramids im Bereich von 50 bis 1000 $cm^3/g$ (gemessen in N- Methyl-pyrrolidon bei 25° C) liegt und die Glasübergangstemperatur über 200°C beträgt.

2. Verfahren zur Herstellung eines thermoplastisch verarbeitbaren Copolyetheramids mit wiederkehrenden Einheiten der Formeln

$-CO-Ar^1-CO-$ (A),

$-NH-Ar^1-O-Ar^1-X-Ar'-O-Ar^1-NH-$ (B) und

$-NH-Ar^2-NH$ (C)

worin $Ar^1$ einen zweiwertigen aromatischen Rest mit 6 C-Atomen, der unsubstituiert oder mit bis zu 2 Alkyl - oder Alkoxyresten mit 1 C-Atom im Alkylrest oder mit Halogen substituiert ist, bedeutet, dessen Bindungen in p-Stellung stehen, X eine 2,2-Propylidenbindung darstellt und $A^2$ gleich
- a) $Ar^1$
- b) $Ar^1$, bei dem die Bindungen in m-Stellung stehen,
- c) die Gruppierung $-Ar^1-Z-Ar^1-$ ist, bei der Z eine direkte Bindung oder ein Rest $-CH_2-$, $-C(CH_3)_2-$, $-SO_2-$, -CO-, -O-, -CH=CH-, -CO-NH- oder $-O-Ar^1-O-$,

- d) der Rest

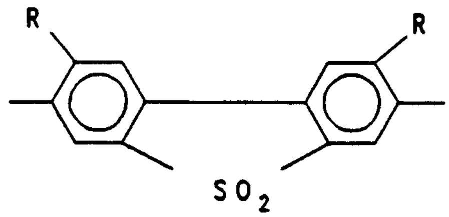

ist, in dem R für Wasserstoff oder einen Alkylrest mit 1-4 C-Atomen steht, der verzweigt oder unverzweigt ist, dadurch gekennzeichnet, daß eine Verbindung der Formel

W-CO-$Ar^1$-CO-W (A') mit

einem Gemisch aus Verbindungen der Formeln

$NH_2$-$Ar^1$-O-$Ar^1$-X-$Ar^1$-O-$Ar^1$-$NH_2$ (B') und

$NH_2$-$Ar^2$-$NH_2$ (C')

worin $Ar^1$, $Ar^2$ und X die oben genannten Bedeutungen haben, W Halogen oder eine Hydroxyl- oder -OR'-Gruppe darstellt, in der R' einen aliphatischen Rest mit 1 bis 4 C-Atomen in der Alkylgruppe, verzweigt oder unverzweigt, oder einen aromatischen Rest bedeutet, nach einem Tieftemperaturlösungs-, Feststoff-, Grenzflächen- oder Schmelzekondensationsverfahren umgesetzt wird, bis das Copolyetheramid einen Staudingerindex [$\eta$] im Bereich von 50 bis 1000 $cm^3/g$ (gemessen in N-Methylpyrrolidon bei 25 °C) und eine Glasübergangstemperatur von über 200 °C aufweist, wobei der Anteil der Verbindung (A') und der der Summe der Verbindungen (B') und (C') jeweils 100 Mol-% und der Anteil von (C') bis zu 50 Mol-%, und wenn Z für -$SO_2$-steht, bis zu 75 Mol-% beträgt.

**3.** Ausführungsform nach Anspruch 1 oder 2, dadurch gekennzeichnet, daß der Staudingerindex im Bereich von 100 bis 600 $cm^3/g$ liegt.

**4.** Ausführungsform nach einem oder mehreren der Ansprüche 1 bis 3, dadurch gekennzeichnet, daß in $Ar^1$ das Halogen Chlor oder Brom ist.

**5.** Ausführungsform nach einem oder mehreren der Ansprüche 1 bis 4, dadurch gekennzeichnet, daß der Anteil der Einheiten (C) bzw. der Verbindung (C') bis zu 25 Mol-%, und wenn Z für -$SO_2$- steht, bis zu 50 Mol-% beträgt.

**6.** Verfahren nach einem oder mehreren der Ansprüche 2 bis 5, dadurch gekennzeichnet, daß die Verbindungen (A'), (B') und (C') in Gegenwart eines aprotischen, polaren Lösungsmittels bei 10 bis 100 °C zur Reaktion gebracht und der Reaktionsansatz bei 50 bis 80 °C nachbehandelt wird.

**7.** Verfahren nach einem oder mehreren der Ansprüche 2 bis 6, dadurch gekennzeichnet, daß als Verbindung (A') Terephthalsäuredichlorid, 2-Chlorterephthalsäuredichlord, Terephthalsäure oder Terephthalsäurediphenylester eingesetzt wird, daß als Verbindung (B') 2,2-Bis-(4'-aminophenoxyphenyl)-propan eingesetzt wird und daß als Verbindung (C') 2,4-Dichlor-p-phenylendiamin, 5-tert.-Butyl-m-phenylendiamin, 3,3'-Dimethoxybenzidin, 3,3'-Dichlorbenzidin, 4,4'-Diaminodiphenylether, 4,4'-Diaminodiphenylketon, 1,4-Bis-(4'-aminophenoxy)benzol oder 2,7-Diamino-3,6-dimethyldibenzothiophen-S,S-dioxid, vorzugsweise p-Phenylendiamin, m-Phenylendiamin, 3,3'-Dimethylbenzidin, 4,4'-Diaminodiphenylmethan oder 4,4-Diaminodiphenylsulfon eingesetzt wird.

**8.** Verfahren nach einem oder mehreren der Ansprüche 2 bis 7, dadurch gekennzeichnet, daß die Reaktion durch Zugabe von monofunktionellen Verbindungen, vorzugsweise Benzoylchlorid oder monofunktionelle Amine, als Kettenabbruchsmittel gestoppt wird.

9. Verfahren nach einem oder mehreren der Ansprüche 2 bis 8, dadurch gekennzeichnet, daß als Lösungsmittel N,N-Dimethylacetamid oder N-Methyl-2-pyrrolidon eingesetzt werden.

10. Verwendung der Copolyetheramide gemäß Anspruch 1 zur Herstellung von Formkörpern.

11. Verwendung nach Anspruch 10 in Form von Fäden, Drähten, Folien und anderen Formteilen.

12. Formkörper gemäß Anspruch 10, hergestellt durch Extrudieren, Verpressen oder Spritzgießen der trockenen, pulverförmigen Copolyetheramide.

13. Formkörper gemäß Anspruch 10, hergestellt durch Verarbeitung von Lösungen der Copolyetheramide.

14. Formkörper nach Anspruch 13, dadurch gekennzeichnet, daß die Verarbeitung aus der Kondensationslösung des Tieftemperaturlösungsverfahrens, über Tränkverfahren, nach dem Trocken-, Naß- oder Trockennaßspinnverfahren, durch Versprühen, nach dem Koagulations- oder Gießverfahren erfolgt.

**Patentansprüche für folgende Vertragsstaaten : ES, GR**

1. Verfahren zur Herstellung eines thermoplastisch verarbeitbaren Copolyetheramids mit wiederkehrenden Einheiten der Formeln

$-CO-Ar^1-CO-$ (A),

$-NH-Ar^1-O-Ar^1-X-Ar^1-O-Ar^1-NH-$ (B) und

$-NH-Ar^2-NH-$ (C)

worin $Ar^1$ einen aromatischen Rest mit 6 C-Atomen, der unsubstituiert oder mit bis zu 2 Alkyl - oder Alkoxyresten mit 1 C-Atom im Alkylrest oder mit Halogen substituiert ist, bedeutet, dessen Bindungen in p-Stellung stehen, X eine 2,2-Propylidenbindung darstellt und $Ar^2$ gleich $Ar^1$ oder $Ar^1$, bei dem die Bindungen in m-Stellung stehen, sowie die Gruppierung $-Ar^1-Z-Ar^1-$ ist, bei der Z eine direkte Bindung oder ein Rest $-CH_2-$, $-C(CH_3)_2-$, $-SO_2-$, -CO-, -O-, -CH=CH-, -CO-NH- oder $-O-Ar^1-O-$, sowie der Rest

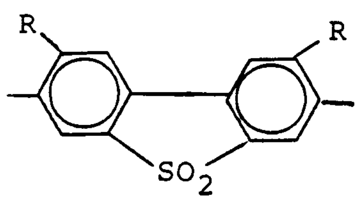

ist, in dem R für Wasserstoff oder einen verzweigten oder unverzweigten Alkylrest mit 1-4 C-Atomen steht, dadurch gekennzeichnet, daß eine Verbindung der Formel

$W-CO-Ar^1-CO-W$ (A') mit

einem Gemisch aus Verbindungen der Formeln

$NH_2-Ar^1-O-Ar^1-X-Ar^1-O-Ar^1-NH_2$ (B') und

$NH_2-Ar^2-NH_2$ (C')

worin $Ar^1$, $Ar^2$ und X die oben genannten Bedeutungen haben, W Halogen oder eine Hydroxyl- oder -OR' Gruppe darstellt, in der R' einen aliphatischen Rest mit 1 bis 4 C-Atomen in der Alkylgruppe, verzweight, oder im verzweigt, oder einen aromatischen Rest bedeutet, nach einem Tieftemperaturlösungs-, Feststoff-, Grenzflächen- oder Schmelzekondensationsverfahren umgesetzt wird, bis das Copolyetheramid einen Staudingerindex $[\eta]$ im Bereich von 50 bis 1000 $cm^3/g$ (gemessenin N-Methylpyrrolidon bei 25°C) und eine Glasübergangstemperatur von über 200°C

aufweist, wobei der Anteil der Verbindung (A') und der der Summe der Verbindungen (B') und (C') jeweils 100 Mol-% und der Anteil von (C') bis zu 50 Mol-%, und wenn Z für $-SO_2-$ steht, bis zu 75 Mol-% beträgt.

**2.** Verfahren nach Anspruch 1, dadurch gekennzeichnet, daß der Staudingerindex im Bereich von 100 bis 600 $cm^3/g$ liegt.

**3.** Verfahren nach Anspruch 1 oder 2, dadurch gekennzeichnet, daß in $Ar^1$ das Halogen Chlor oder Brom ist.

**4.** Verfahren nach einem oder mehreren der Ansprüche 1 bis 3, dadurch gekennzeichnet, daß der Anteil der Einheiten (C) bzw. der Verbindung (C') bis zu 25 Mol-%, und wenn Z für $-SO_2-$ steht, bis zu 50 Mol-% beträgt.

**5.** Verfahren nach einem oder mehreren der Ansprüche 1 bis 4, dadurch gekennzeichnet, daß die Verbindungen (A'), (B') und (C') in Gegenwart eines aprotischen, polaren Lösungsmittels bei 10 bis 100 ° C zur Reaktion gebracht und der Reaktionsansatz bei 50 bis 80 ° C nachbehandelt wird.

**6.** Verfahren nach einem oder mehreren der Ansprüche 1 bis 5, dadurch gekennzeichnet, daß als Verbindung (A') Terephthalsäuredichlorid, 2-Chlor-terephthalsäuredichlorid, Terephthalsäure oder Terephthalsäurediphenylester eingesetzt wird, daß als Verbindung (B') 2,2-Bis-(4'-aminophenoxyphenyl)-propan eingesetzt wird und daß als Verbindung (C') 2,4-Dichlor-p-phenylendiamin, 5-tert.-Butyl-m-phenylendiamin, 3,3'-Dimethoxybenzidin, 3,3'-Dichlorbenzidin, 4,4'-Diaminodiphenylether, 4,4'-Diaminodiphenylketon, 1,4-Bis-(4'-aminophenoxy)benzol oder 2,7-Diamino-3,6-dimethyldibenzothiophen-S,S-dioxid, vorzugsweise p-Phenylendiamin, m-Phenylendiamin, 3,3'-Dimethylbenzidin, 4,4'-Diaminodiphenylmethan oder 4,4-Diaminodiphenylsulfon eingesetzt wird.

**7.** Verfahren nach einem oder mehreren der Ansprüche 1 bis 6, dadurch gekennzeichnet, daß die Reaktion durch Zugabe von monofunktionellen Verbindungen, vorzugsweise Benzoylchlorid oder monofunktionelle Amine, als Kettenabbruchsmittel gestoppt wird.

**8.** Verfahren nach einem oder mehreren der Ansprüche 1 bis 7, dadurch gekennzeichnet, daß als Lösungsmittel N,N-Dimethylacetamid oder N-Methyl-2-pyrrolidon eingesetzt werden.

**9.** Verwendung der Copolyetheramide gemäß Anspruch 1 zur Herstellung von Formkörpern.

**10.** Verwendung nach Anspruch 9 in Form von Fäden, Drähten, Folien und anderen Formteilen.

**11.** Formkörper gemäß Anspruch 9, hergestellt durch Extrudieren, Verpressen oder Spritzgießen der trockenen, pulverförmigen Copolyetheramide.

**12.** Formkörper gemäß Anspruch 9, hergestellt durch Verarbeitung von Lösungen der Copolyetheramide.

**13.** Formkörper nach Anspruch 12, dadurch gekennzeichnet, daß die Verarbeitung aus der Kondensationslösung des Tieftemperaturlösungsverfahrens, über Tränkverfahren, nach dem Trocken-, Naß- oder Trockennaßspinnverfahren, durch Versprühen, nach dem Koagulations- oder Gießverfahren erfolgt.

**Claims**
**Claims for the following Contracting States : AT, BE, CH, DE, FR, GB, IT, LI, NL, SE**

**1.** An aromatic copolyether amide which can be processed as a thermoplastic, wherein the structure comprises recurring units of the formulae

$-CO-Ar^1-CO-$ (A),

$-NH-Ar^1-O-Ar^1-X-Ar^1-O-Ar^1-NH-$ (B) and

$-NH-Ar^2-NH-$ (C)

in which $Ar^1$ denotes a divalent aromatic radical having 6 carbon atoms which is unsubstituted or substituted by up to 2 alkyl or alkoxy radicals having 1 carbon atom in the alkyl radical or by halogen and which is linked in the p-position, X represents a 2,2-propylidene link and $Ar^2$ is identical with

a) $Ar^1$

b) $Ar^1$ which is linked in the m-position,

c) the $-Ar^1-Z-Ar^1-$ group in which Z is a direct bond or a radical $-CH_2-$, $-C(CH_3)_2-$, $-SO_2-$, -CO-, -O-, -CH = CH-, -CO-NH- or $-O-Ar^1-O-$ or

d) the radical

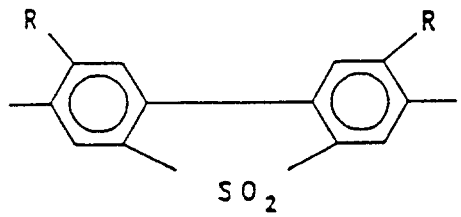

in which R represents hydrogen or a branched or unbranched alkyl radical having 1 - 4 carbon atoms, the proportion of units (A) and of the sum of units (B) and (C) is each 100 mol-%, the proportion of units (C) being up to 50 mol-% and, if Z represents $-SO_2-$, up to 75 mol-%, and the Staudinger index [$\eta$] of the copolyether amide is in the range from 50 to 1000 $cm^3/g$ (measured in N-methylpyrrolidone at 25 °C) and the glass transition temperature is above 200 °C.

**2.** A process for the preparation of a copolyether amide which can be processed as a thermoplastic and contains recurring units of the formulae

$-CO-Ar^1-CO-$ (A),

$-NH-Ar^1-O-Ar^1-X-Ar^1-O-Ar^1-NH-$ (B) and

$-NH-Ar^2-NH-$ (C)

in which $Ar^1$ denotes a divalent aromatic radical having 6 carbon atoms which is unsubstituted or substituted by up to 2 alkyl or alkoxy radicals having 1 carbon atom in the alkyl radical or by halogen and which is linked in the p-position, X represents a 2,2-propylidene link and $Ar^2$ is identical with

a) $Ar^1$

b) $Ar^1$ which is linked in the m-position,

c) the $-Ar^1-Z-Ar^1-$ group in which Z is a direct bond or a radical $-CH_2-$, $-C(CH_3)_2-$, $-SO_2-$, -CO-, -O-, -CH = CH-, -CO-NH- or $-O-Ar^1-O-$ or

d) the radical

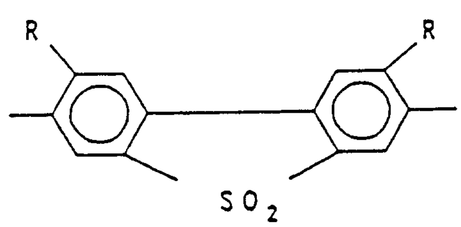

in which R represents hydrogen or a branched or unbranched alkyl radical having 1 - 4 carbon atoms, which comprises reacting a compound of the formula

$W-CO-Ar^1-CO-W$ (A')

with a mixture of compounds of the formulae

$NH_2$-$Ar^1$-O-$Ar^1$-X-$Ar^1$-O-$Ar^1$-$NH_2$ (B') and

$NH_2$-$Ar^2$-$NH_2$ (C')

in which $Ar^1$, $Ar^2$ and X have the abovementioned meanings, and W represents halogen or a hydroxyl or -OR' group, in which R' is a branched or unbranched aliphatic radical having 1 to 4 carbon atoms in the alkyl group, or an aromatic radical, by a low-temperature solution, solid, interface or melt condensation process until the copolyether amide has a Staudinger index [$\eta$] in the range from 50 to 1000 $cm^3/g$ (measured in N-methylpyrrolidone at 25 °C) and a glass transition temperature of above 200 °C, the proportion of compound (A') and of the sum of compounds (B') and (C') each being 100 mol-% and the proportion of (C') being up to 50 mol-% and, if Z represents -$SO_2$-, up to 75 mol-%.

**3.** An embodiment as claimed in claim 1 or 2, wherein the Staudinger index is in the range from 100 to 600 $cm^3/g$.

**4.** An embodiment as claimed in one or more of claims 1 to 3, wherein the halogen in $Ar^1$ is chlorine or bromine.

**5.** An embodiment as claimed in one or more of claims 1 to 4, wherein the proportion of units (C) or of compound (C') is up to 25 mol-% and, if Z represents -$SO_2$-, up to 50 mol-%.

**6.** The process as claimed in one or more of claims 2 to 5, wherein the compounds (A'), (B') and (C') are reacted in the presence of an aprotic, polar solvent at 10 to 100 °C, and the reaction batch is aftertreated at 50 to 80 °C.

**7.** The process as claimed in one or more of claims 2 to 6, wherein compound (A') is terephthaloyl dichloride, 2-chloroterephthaloyl dichloride, terephthalic acid or diphenyl terephthalate, wherein compound (B') is 2,2-bis-(4'-aminophenoxyphenyl)propane, and wherein compound (C') is 2,4-dichloro-p-phenylenediamine, 5-tert.-butyl-m-phenylenediamine, 3,3'-dimethoxybenzidine, 3,3'-dichlorobenzidine, 4,4'-diaminodiphenyl ether, 4,4'-diaminodiphenyl ketone, 1,4-bis-(4'-aminophenoxy)-benzene or 2,7-diamino-3,6-dimethyldibenzothiophene S,S-dioxide, preferably p-phenylenediamine, m-phenylenediamine, 3,3'-dimethylbenzidine, 4,4'-diaminodiphenylmethane or 4,4'-diaminodiphenyl sulfone.

**8.** The process as claimed in one or more of claims 2 to 7, wherein the reaction is terminated by adding monofunctional compounds, preferably benzoyl chloride or monofunctional amines, as chain terminators.

**9.** The process as claimed in one or more of claims 2 to 8, wherein the solvent employed is N,N-dimethylacetamide or N-methyl-2-pyrrolidone.

**10.** The use of a copolyether amide as claimed in claim 1 for the production of moldings.

**11.** The use as claimed in claim 10 in the form of filaments, wires, films and other moldings.

**12.** A molding as claimed in claim 10, produced by extrusion, press-molding or injection-molding of the dry, pulverulent copolyether amide.

**13.** A molding as claimed in claim 10, produced by processing the solution of the copolyether amide.

**14.** A molding as claimed in claim 13, wherein the processing is carried out from the condensation solution of the low-temperature solution process, by the impregnation process, by the dry, wet or dry/wet spinning process, by spraying, or by the coagulation or casting process.

**Claims for the following Contracting States : ES, GR**

1. A process for the preparation of a copolyether amide which can be processed as a thermoplastic and contains recurring units of the formulae

$-CO-Ar^1-CO-$ (A),

$-NH-Ar^1-O-Ar^1-X-Ar^1-O-Ar^1-NH-$ (B) and

$-NH-Ar^2-NH-$ (C)

in which $Ar^1$ denotes an aromatic radical having 6 carbon atoms which is unsubstituted or substituted by up to 2 alkyl or alkoxy radicals having 1 carbon atom in the alkyl radical or by halogen and which is linked in the p-position, X represents a 2,2-propylidene link and $Ar^2$ is identical with $Ar^1$ or $Ar^1$ which is linked in the m-position, or is the $-Ar^1-Z-Ar^1-$ group in which Z is a direct bond or a radical $-CH_2-$, $-C(CH_3)_2-$, $-SO_2-$, -CO-, -O-, -CH=CH-, -CO-NH- or $-O-Ar^1-O-$ or the radical

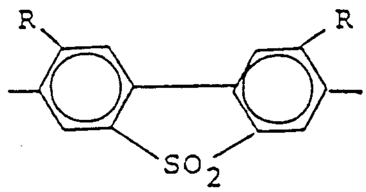

in which R represents hydrogen or a branched or unbranched alkyl radical having 1 - 4 carbon atoms, which comprises reacting a compound of the formula

$W-CO-Ar^1-CO-W$ (A')

with a mixture of compounds of the formulae

$NH_2-Ar^1-O-Ar^1-X-Ar^1-O-Ar^1-NH_2$ (B') and

$NH_2-Ar^2-NH_2$ (C')

in which $Ar^1$, $Ar^2$ and X have the abovementioned meanings, and W represents halogen or a hydroxyl or -OR' group, in which R' is a branched or unbranched aliphatic radical having 1 to 4 carbon atoms in the alkyl group, or an aromatic radical, by a low-temperature solution, solid, interface or melt condensation process until the copolyether amide has a Staudinger index $[\eta]$ in the range from 50 to 1000 $cm^3/g$ (measured in N-methylpyrrolidone at 25 °C) and a glass transition temperature of above 200 °C, the proportion of compound (A') and of the sum of compounds (B') and (C') each being 100 mol-% and the proportion of (C') being up to 50 mol-% and, if Z represents $-SO_2-$, up to 75 mol-%.

2. The process as claimed in claim 1, wherein the Staudinger index is in the range from 100 to 600 $cm^3/g$.

3. The process as claimed in claim 1 or 2, wherein the halogen in $Ar^1$ is chlorine or bromine.

4. The process as claimed in one or more of claims 1 to 3, wherein the proportion of units (C) or of compound (C') is up to 25 mol-% and, if Z represents $-SO_2-$, up to 50 mol-%.

5. The process as claimed in one or more of claims 1 to 4, wherein the compounds (A'), (B') and (C') are reacted in the presence of an aprotic, polar solvent at 10 to 100 °C, and the reaction batch is aftertreated at 50 to 80 °C.

6. The process as claimed in one or more of claims 1 to 5, wherein compound (A') is terephthaloyl dichloride, 2-chloroterephthaloyl dichloride, terephthalic acid or diphenyl terephthalate, wherein compound (B') is 2,2-bis-(4'-aminophenoxyphenyl)propane, and wherein compound (C') is 2,4-dichloro-p-phenylenediamine, 5-tert.-butyl-m-phenylenediamine, 3,3'-dimethoxybenzidine, 3,3'-dichlorobenzidine, 4,4'-diaminodiphenyl ether, 4,4'-diaminodiphenyl ketone, 1,4-bis-(4'-aminophenoxy)benzene or 2,7-diamino-3,6-dimethyldibenzothiophene S,S-dioxide, preferably p-phenylenediamine, m-phenylenediamine, 3,3'-dimethylbenzidine, 4,4'-diaminodiphenylmethane or 4,4'-diaminodiphenyl sulfone.

**7.** The process as claimed in one or more of claims 1 to 6, wherein the reaction is terminated by adding monofunctional compounds, preferably benzoyl chloride or monofunctional amines, as chain terminators.

**8.** The process as claimed in one or more of claims 1 to 7, wherein the solvent employed is N,N-dimethylacetamide or N-methyl-2-pyrrolidone.

**9.** The use of a copolyether amide as claimed in claim 1 for the production of moldings.

**10.** The use as claimed in claim 9 in the form of filaments, wires, films and other moldings.

**11.** A molding as claimed in claim 9, produced by extrusion, press-molding or injection-molding of the dry, pulverulent copolyether amide.

**12.** A molding as claimed in claim 9, produced by processing the solution of the copolyether amide.

**13.** A molding as claimed in claim 12, wherein the processing is carried out from the condensation solution of the low-temperature solution process, by the impregnation process, by the dry, wet or dry/wet spinning process, by spraying, or by the coagulation or casting process.

**Revendications**

**Revendications pour les Etats contractants suivants : AT, BE, CH, DE, FR, GB, IT, LI, NL, SE**

**1.** Copolyétheramide aromatique façonnable par voie thermoplastique, caractérisé en ce qu'il est formé de motifs récurrents de formules :

$-CO-Ar^1-CO-$ (A),

$-NH-Ar^1-O-Ar^1-X-Ar^1-O-Ar^1-NH-$ (B) et

$-NH-Ar^2-NH-$ (C)

dans lesquelles $Ar^1$ désigne un radical aromatique divalent à 6 atomes de carbone, sans substituants ou avec jusqu'à deux alkyles ou alcoxy à un atome de carbone ou halogènes, radical dont les liaisons sont en position para, X désigne une liaison 2,2-propylidène et $Ar^2$

a) un radical $Ar^1$,

b) un radical $Ar^1$ dont les liaisons sont en position méta,

c) un groupe $-Ar^1-Z-Ar^1$ dont Z est une liaison directe ou un radical $-CH_2-$, $-C(CH_3)_2-$, $-SO_2$, $-CO-$, $-O-$, $-CH=CH-$, $-CO-NH-$ ou $-O-Ar^1-O-$, ou encore

d) un radical

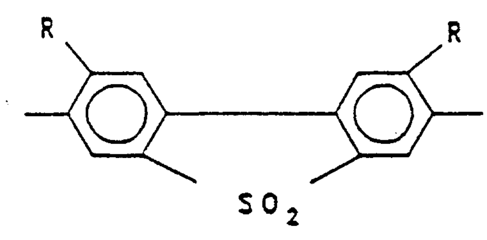

dans lequel R désigne l'hydrogène ou un alkyle ramifié ou non ayant de 1 à 4 atomes de carbone, la

proportion des motifs (A) et de la somme des motifs (B) et (C) est toujours de 100 mol-%, la proportion des motifs (C) pouvant s'élever jusqu'à 50 mol-%, et si Z est le radical $-SO_2-$, jusqu'à 75 mol-%, l'indice de Staudinger [η] de ce copolyétheramide est compris entre 50 et 1000 $cm^3/g$, mesuré dans de la N-méthylpyrrolidone à la température de 25 °C, et sa température de transition vitreuse est supérieure à 200 °C.

**2.** Procédé de préparation d'un copolyétheramide façonnable par voie thermoplastique, à motifs récurrents de formules :

$-CO-Ar^1-CO-$ (A),

$-NH-Ar^1-O-Ar^1-X-Ar^1-O-Ar^1-NH-$ (B) et

$-NH-Ar^2-NH-$ (C)

dans lesquelles $Ar^1$ désigne un radical aromatique divalent à 6 atomes de carbone, sans substituants ou avec jusqu'à deux alkyles ou alcoxy à un atome de carbone ou halogènes, radical dont les liaisons sont en position para, X désigne une liaison 2,2-propylidène et $Ar^2$

a) un radical $Ar^1$,
b) un radical $Ar^1$ dont les liaisons sont en position méta,
c) un groupe $-Ar^1-Z-Ar^1$ dont Z est une liaison directe ou un radical $-CH_2-$, $-C(CH_3)_2-$, $-SO_2-$, $-CO-$, $-O-$, $-CH=CH-$, $-CO-NH-$ ou $-O-Ar^1-O-$, ou encore
d) un radical

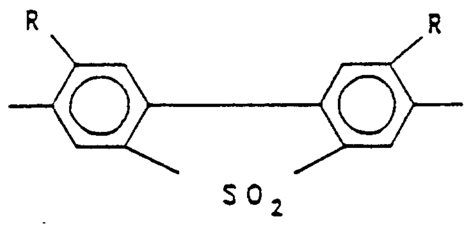

dans lequel R désigne l'hydrogène ou un alkyle ramifié ou non ayant de 1 à 4 atomes de carbone, procédé caractérisé en ce que que l'on fait réagir un composé de formule :

$W-CO-Ar^1-CO-W$ (A'), avec

un mélange de composés de formules :

$NH_2-Ar^1-O-Ar^1-X-Ar^1-O-Ar^1-NH_2$ (B') et

$NH_2-Ar^2-NH_2$ (C')

les divers symboles ayant les significations ci-dessus indiquées et W désignant un halogène, un hydroxyle ou un groupe -OR', A' étant un radical aliphatique à alkyle en $C_1$ à $C_4$, ramifié ou non, ou bien un radical aromatique, par un procédé de condensation en solution à basse température, sur les matières solides, sur les surfaces de séparation ou sur les matières fondues, jusqu'à ce que le copolyétheramide formé ait un indice de Staudinger [η] de 50 et 1000 $cm^3/g$, mesuré dans de la N-méthylpyrrolidone à la température de 25 °C, et une température de transition vitreuse supérieure à 200 °C, la proportion du composé (A') et de la somme des composés (B') et (C,) étant toujours de 100 mol-% et la proportion du composé (C') pouvant s'élever jusqu'à 50 mol-%, et si Z est le groupe $-SO_2-$, jusqu'à 75 mol-%.

**3.** Variante de la revendication 1 ou 2, caractérisée en ce que l'indice de Staudinger est compris entre 100 et 600 $cm^3/g$.

4. Variante d'une ou de plusieurs des revendications 1 ou 3, caractérisée en ce que l'halogène du radical $Ar^1$ est le chlore ou le brome.

5. Variante d'une ou de plusieurs des revendications 1 ou 4, caractérisée en ce que la proportion des motifs (C) ou du composé (C') ne dépasse pas 25 mol-%, et si Z est le groupe $-SO_2-$ elle ne dépasse pas 50 mol-%.

6. Procédé selon une ou plusieurs des revendications 2 ou 5, caractérisé en ce que l'on fait réagir les composés (A'), (B') et (C') en présence d'un solvant polaire aprotique à une température de 10 à 100 °C, puis on traite le mélange de réaction entre 50 et 80 °C.

7. Procédé selon une ou plusieurs des revendications 2 ou 6, caractérisé en ce que le composé (A') est le dichlorure de l'acide téréphtalique ou de l'acide 2-chloro-téréphtalique, l'acide téréphtalique ou le téréphtalate de diphényle, le composé (B') est le 2,2-bis-(4'-aminophénoxyphényl)-propane et le composé (C') la 2,4-dichloro-p-phénylène-diamine, la 5-tert-butyl-m-phénylène-diamine, la 3,3'-diméthoxybenzidine, la 3,3'-dichlorobenzidine, l'éther 4,4'-diaminodiphénylique, la 4'4'-diaminodiphénylcétone, le 1,4-bis-(4'-aminophénoxy)-benzène ou le S,S-dioxyde de 2,7-diamino-3,6-diméthyldibenzothiophène, avec une préférence pour la p-phénylène-diamine, la m-phénylène-diamine, la 3,3'-diméthylbenzidine, le 4,4'-diaminodiphénylméthane et la 4'4'-diaminodiphénylsulfone.

8. Procédé selon une ou plusieurs des revendications 2 ou 7, caractérisé en ce que l'on arrête la réaction en ajoutant des composés monofonctionnels, de préférence du chlorure de benzoyle ou des amines monofonctionnelles, comme agents d'arrêt de la longueur des chaînes.

9. Procédé selon une ou plusieurs des revendications 2 ou 8, caractérisé en ce que l'on utilise comme solvant du N,N-diméthylacétamide ou de la N-méthyl-2-pyrrolidone.

10. L'emploi des copolyétheramides de la revendication 1 pour fabriquer des articles moulés.

11. Emploi selon la revendication 10 pour la fabrication de fils et filaments, feuilles et autres objets moulés.

12. Articles moulés selon la revendication 10 qui ont été fabriqués par extrusion, pressage ou moulage par injection des copolyétheramides secs pulvérulents.

13. Articles moulés selon la revendication 10 qui ont été fabriqués par traitement de solutions des copolyétheramides.

14. Articles moulés selon la revendication 13, caractérisés en ce que le traitement se fait à partir de la solution de condensation du procédé en solution à basse température, par l'intermédiaire de la méthode d'imprégnation, suivant le procédé de filage à sec, à l'état humide ou sec-humide, par pulvérisation, suivant le procédé de coagulation ou de coulée.

**Revendications pour les Etats contractants suivants : ES, GR**

1. Procédé de préparation d'un copolyétheramide façonnable par voie thermoplastique, à motifs récurrents de formules :

$-CO-Ar^1-CO-$ (A),

$-NH-Ar^1-O-Ar^1-X-Ar^1-O-Ar^1-NH-$ (B) et

$-NH-Ar^2-NH-$ (C)

dans lesquelles $Ar^1$ désigne un radical aromatique divalent à 6 atomes de carbone, sans substituants ou avec jusqu'à deux alkyles ou alcoxy à un atome de carbone ou halogènes, radical dont les liaisons sont en position para, X désigne une liaison 2,2-propylidène et $Ar^2$ est un radical $Ar^1$, ou un radical $Ar^1$ dont les liaisons sont en position méta, ainsi que un groupe $-Ar^1-Z-Ar^1$ dont Z est une liaison directe ou un radical $-CH_2-$, $-C(CH_3)_2-$, $-SO_2-$, $-CO-$, $-O-$, $-CH=CH-$, $-CO-NH-$ ou $-O-Ar^1-O-$, ainsi que un radical

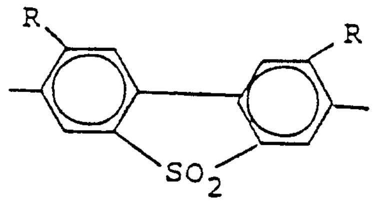

dans lequel R désigne l'hydrogène ou un alkyle ramifié ou non ayant de 1 à 4 atomes de carbone, procédé caractérisé en ce que que l'on fait réagir un composé de formule :

W-CO-Ar$^1$-CO-W (A'), avec

un mélange de composés de formules :

$NH_2$-Ar$^1$-O-Ar$^1$-X-Ar$^1$-O-Ar$^1$-$NH_2$ (B') et

$NH_2$-Ar$^2$-$NH_2$ (C')

les divers symboles ayant les significations ci-dessus indiquées et W désignant un halogène, un hydroxyle ou un groupe -OR', R' étant un radical aliphatique à alkyle en $C_1$ à $C_4$, ramifié ou non, ou bien un radical aromatique, par un procédé de condensation en solution à basse température, sur les matières solides, sur les surfaces de séparation ou sur les matières fondues, jusqu'à ce que le copolyétheramide formé ait un indice de Staudinger [$\eta$] de 50 et 1000 cm$^3$/g, mesuré dans de la N-méthylpyrrolidone à la température de 25 °C, et une température de transition vitreuse supérieure à 200 °C, la proportion du composé (A') et de la somme des composés (B') et (C') étant toujours de 100 mol-% et la proportion du composé (C') pouvant s'élever jusqu'à 50 mol-%, et si Z est le groupe -$SO_2$-, jusqu'à 75 mol-%.

2. Procédé selon la revendication 1, caractérisé en ce que l'indice de Staudinger est compris entre 100 et 600 cm$^3$/g.

3. Procédé selon la revendication 1 ou 2, caractérisé en ce que l'halogène du radical Ar$^1$ est le chlore ou le brome.

4. Procédé selon une ou plusieurs des revendications 1 ou 3, caractérisé en ce que la proportion des motifs (C) ou du composé (C') ne dépasse pas 25 mol-%, et si Z est le groupe -$SO_2$- elle ne dépasse pas 50 mol-%.

5. Procédé selon une ou plusieurs des revendications 1 ou 4, caractérisé en ce que l'on fait réagir les composés (A'), (B') et (C') en présence d'un solvant polaire aprotique à une température de 10 à 100 °C, puis on traite le mélange de réaction entre 50 et 80 °C.

6. Procédé selon une ou plusieurs des revendications 1 ou 5, caractérisé en ce que le composé (A') est le dichlorure de l'acide téréphtalique ou de l'acide 2-chloro-téréphtalique, l'acide téréphtalique ou le téréphtalate de diphényle, le composé (B') est le 2,2-bis-(4'-aminophénoxyphényl)-propane et le composé (C') la 2,4-dichloro-p-phénylène-diamine, la 5-tert-butyl-m-phénylène-diamine, la 3,3'-diméthoxybenzidine, la 3,3'-dichlorobenzidine, l'éther 4,4'-diaminodiphénylique, la 4,4,-diaminodiphénylcétone, le 1,4-bis-(4'-aminophénoxy)-benzène ou le S,S-dioxyde de 2,7-diamino-3,6-diméthyldibenzothiophène, avec une préférence pour la p-phénylène-diamine, la m-phénylène-diamine, la 3,3'-diméthylbenzidine, le 4,4'-diaminodiphénylméthane et la 4,4'-diaminodiphénylsulfone.

7. Procédé selon une ou plusieurs des revendications 1 ou 6, caractérisé en ce que l'on arrête la réaction en ajoutant des composés monofonctionnels, de préférence du chlorure de benzoyle ou des amines monofonctionnelles, comme agents d'arrêt de la longueur des chaînes.

**8.** Procédé selon une ou plusieurs des revendications 1 ou 7, caractérisé en ce que l'on utilise comme solvant du N,N-diméthylacétamide ou de la N-méthyl-2-pyrrolidone.

**9.** L'emploi des copolyétheramides de la revendication 1 pour fabriquer des articles moulés.

**10.** Emploi selon la revendication 9 pour la fabrication de fils et filaments, feuilles et autres objets moulés.

**11.** Articles moulés selon la revendication 9 qui ont été fabriqués par extrusion, pressage ou moulage par injection des copolyétheramides secs pulvérulents.

**12.** Articles moulés selon la revendication 9 qui ont été fabriqués par traitement de solutions des copolyétheramides.

**13.** Articles moulés selon la revendication 12, caractérisés en ce que le traitement se fait à partir de la solution de condensation du procédé en solution à basse température, par l'intermédiaire de la méthode d'imprégnation, suivant le procédé de filage à sec, à l'état humide ou sec-humide, par pulvérisation, suivant le procédé de coagulation ou de coulée.